(19) Europäisches Patentamt / European Patent Office / Office européen des brevets

(11) **EP 4 382 483 A1**

(12) **EUROPEAN PATENT APPLICATION**
published in accordance with Art. 153(4) EPC

(43) Date of publication:
**12.06.2024 Bulletin 2024/24**

(21) Application number: **22852815.4**

(22) Date of filing: **15.07.2022**

(51) International Patent Classification (IPC):
*C01G 25/00* (2006.01)   *H01M 4/62* (2006.01)
*H01B 1/06* (2006.01)   *H01M 6/18* (2006.01)
*H01M 10/0562* (2010.01)

(52) Cooperative Patent Classification (CPC):
**C01G 25/00; H01B 1/06; H01M 4/62; H01M 6/18; H01M 10/0562;** Y02E 60/10

(86) International application number:
**PCT/JP2022/027921**

(87) International publication number:
**WO 2023/013391 (09.02.2023 Gazette 2023/06)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **06.08.2021 JP 2021130376**

(71) Applicant: **Panasonic Intellectual Property Management Co., Ltd.**
**Kadoma-shi, Osaka 571-0057 (JP)**

(72) Inventor: **SAKAIDA Masashi**
**Kadoma-shi, Osaka 571-0057 (JP)**

(74) Representative: **Grünecker Patent- und Rechtsanwälte**
**PartG mbB**
**Leopoldstraße 4**
**80802 München (DE)**

(54) **COMPOSITION, BATTERY, AND METHOD FOR MANUFACTURING COMPOSITION**

(57)     According to the present disclosure, a composition comprises a compound and a solvent. The compound comprises Li and at least one selected from the group consisting of Zr, Al, and F. The compound is in a form of particles and has an average particle diameter of less than 0.68 $\mu$m. According to the present disclosure, a battery 1000 comprises a positive electrode 201, a negative electrode 203, and an electrolyte layer 202 disposed between the positive electrode 201 and the negative electrode 203. At least one selected from the group consisting of the positive electrode 201, the negative electrode 203, and the electrolyte layer 202 comprises a solid derived from the composition of the present disclosure.

FIG. 1

**Description**

Technical Field

The present disclosure relates to a composition, a battery, and a method for producing the composition.

Background Art

Patent Literature 1 discloses an all-solid-state battery that uses a sulfide solid electrolyte.
Patent Literature 2 discloses $LiBF_4$ as a fluoride solid electrolyte material.

Citation List

Non Patent Literature

PTL 1: Japanese Unexamined Patent Application Publication No. 2011-129312
PTL 2: Japanese Unexamined Patent Application Publication No. 2008-277170

Summary of Invention

Technical Problem

An object of the present disclosure is to provide a composition suitable for improving an ionic conductivity of a solid electrolyte material.

Solution to Problem

According to the present disclosure, a composition comprises a compound and a solvent. The compound comprises Li and at least one selected from the group consisting of Zr, Al, and F. The compound is in a form of particles and has an average particle diameter of less than 0.68 $\mu$m.

Advantageous Effects of Invention

The present disclosure provides a composition suitable for improving an ionic conductivity of a solid electrolyte material.

Brief Description of Drawings

[Fig. 1] Fig. 1 is a cross-sectional view of a battery 1000, according to a second embodiment.
[Fig. 2A] Fig. 2A is a scanning electron microscope (SEM) image acquired to evaluate a particle diameter of particles present in a composition of Example 1.
[Fig. 2B] Fig. 2B is an SEM image acquired to evaluate the particle diameter of particles present in a composition of Example 2.
[Fig. 2C] Fig. 2C is an SEM image acquired to evaluate the particle diameter of particles present in a composition of Example 3.
[Fig. 2D] Fig. 2D is an SEM image acquired to evaluate the particle diameter of particles present in a composition of Example 4.
[Fig. 2E] Fig. 2E is an SEM image acquired to evaluate the particle diameter of particles present in a composition of Example 5.
[Fig. 2F] Fig. 2F is an SEM image acquired to evaluate the particle diameter of particles present in a composition of Example 6.
[Fig. 2G] Fig. 2G is an SEM image acquired to evaluate the particle diameter of particles present in a composition of Example 7.
[Fig. 2H] Fig. 2H is an SEM image acquired to evaluate the particle diameter of particles present in a composition of Example 8.
[Fig. 2I] Fig. 2I is an SEM image acquired to evaluate the particle diameter of particles present in a composition of Example 9.
[Fig. 2J] Fig. 2J is an SEM image acquired to evaluate the particle diameter of particles present in a composition of Example 10.
[Fig. 2K] Fig. 2K is an SEM image acquired to evaluate the particle diameter of particles present in a composition of Example 11.
[Fig. 2L] Fig. 2L is an SEM image acquired to evaluate the particle diameter of particles present in a composition of Example 12.
[Fig. 2M] Fig. 2M is an SEM image acquired to evaluate the particle diameter of particles present in a composition of Example 13.
[Fig. 2N] Fig. 2N is an SEM image acquired to evaluate the particle diameter of particles present in a composition of Example 14.
[Fig. 2O] Fig. 2O is an SEM image acquired to evaluate the particle diameter of particles present in a composition of Reference Example 1.
[Fig. 3] Fig. 3 is a schematic diagram of a pressure molding die 300, which is used for evaluating an ionic conductivity of solid electrolyte materials.
[Fig. 4] Fig. 4 is a graph showing a Cole-Cole plot obtained in an impedance measurement performed on a solid electrolyte material of Example 1.
[Fig. 5] Fig. 5 is a graph showing an initial discharge characteristic of batteries of Example 1 and Comparative Example 1.

Description of Embodiments

Embodiments of the present disclosure will be described below with reference to the drawings.

(First Embodiment)

According to a first embodiment, a composition comprises a compound and a solvent. The compound comprises Li and at least one selected from the group consisting of Zr, Al, and F. The compound is in the form of particles and has an average particle diameter of less than 0.68 $\mu$m. The average particle diameter of the compound in the form of particles can be determined by morphological examination of an SEM image. Specifically, first, the composition of the first embodiment is dried (e.g. by vacuum drying) to extract the particles of the compound, and then, an SEM image of the particles is acquired. In the acquired SEM image, 40 primary particles of the compound are randomly selected. Then, a unidirectional diameter (Feret diameter) of the selected primary particles is measured. Of the particle diameters of the 40 particles, the 10 smallest particle diameters are excluded from consideration, and the average particle diameter is calculated by simply averaging the particle diameters of the remaining 30 particles.

The composition of the first embodiment is suitable for improving an ionic conductivity of a solid electrolyte material.

The solid (i.e., solid electrolyte material) that results when the solvent is removed from the composition of the first embodiment is a solid electrolyte material having improved lithium ion conductivity. In the process of removing the solvent, the application of heat to the compound present in the composition of the first embodiment results in the formation of the solid electrolyte material. Desirably, the particles dispersed in the composition have a small particle diameter so that the formation reaction can be promoted efficiently. Specifically, when the average particle diameter is less than 0.68 $\mu$m, the formation reaction proceeds efficiently, and as a result, a solid electrolyte material having improved ionic conductivity can be obtained. Furthermore, in the process of micronization or dispersion of the raw materials, if the raw materials react with one another to form a precursor of the solid electrolyte material, the formation reaction for the solid electrolyte material is expected to proceed more efficiently.

The average particle diameter of the compound that is included in the composition of the first embodiment may be less than or equal to 0.5 $\mu$m, less than or equal to 0.3 $\mu$m, or less than or equal to 0.2 $\mu$m, so that the ionic conductivity of the resulting solid electrolyte material can be further improved. The lower limit of the average particle diameter of the compound is not particularly limited, and the average particle diameter may be, for example, greater than or equal to 0.01 $\mu$m.

The solid electrolyte material that can be derived from the composition of the first embodiment (hereinafter referred to as a "solid electrolyte material of the first embodiment") can be used to produce a battery that has excellent charge-discharge characteristics. Examples of the battery include all-solid-state batteries. The all-solid-state batteries may be primary batteries or secondary batteries.

The solvent that is included in the composition of the first embodiment may comprise a compound having at least one functional group selected from the group consisting of ester groups and hydroxy groups. When the solvent that is included is a compound having such a functional group, a reduction in the particle diameter of the particles, that is, the compound, dispersed in the composition of the first embodiment can be promoted efficiently.

The solvent that is included in the composition of the first embodiment may comprise at least one selected from the group consisting of γ-butyrolactone, propylene carbonate, butyl acetate, ethanol, dimethyl sulfoxide, and tetralin.

For example, the composition of the first embodiment may be prepared as follows. The compound, such as LiF, $ZrF_4$, or $AlF_3$, is mixed with the solvent, and in this state, the compound is ground in a planetary ball mill, whereby micronization and dispersion of the compound are carried out simultaneously. With such a technique, the synthesis, micronization, and slurrying of the solid electrolyte material can be carried out simultaneously, and, therefore, a reduction in the number of steps can be expected.

As described, the compound that is included in the composition of the first embodiment may be a source material of a solid electrolyte material. The compound that is included in the composition of the first embodiment may be, for example, a source material of a solid electrolyte containing Li, Zr, Al, and F.

The composition of the first embodiment may comprise, as the compound, at least one selected from the group consisting of LiF, $Li_2ZrF_6$, and $Li_3AlF_6$.

It is desirable that the solid electrolyte material of the first embodiment be sulfur-free. Sulfur-free solid electrolyte materials provide excellent safety because they do not produce hydrogen sulfide even when exposed to air. The sulfide solid electrolyte disclosed in Patent Literature 1 may produce hydrogen sulfide when exposed to air.

In instances where the composition of the first embodiment contains F, the solid electrolyte material of the first embodiment contains F and, consequently, can have high oxidation resistance. This is because F has a high redox potential. In addition, since F has a high electronegativity, F has a relatively strong bond with Li. As a result, typically, solid electrolyte materials containing Li and F have a low lithium ion conductivity. For example, the $LiBF_4$ disclosed in Patent Literature 2 has a low ionic conductivity of $6.67 \times 10^{-9}$ S/cm. In contrast, in instances where the solid electrolyte material that can be derived from the composition of the first embodiment further contains, for example, Zr and Al, in addition to Li and F, the solid electrolyte material can have a high ionic conductivity of greater than or equal to $7 \times 10^{-9}$ S/cm, for example.

The solid electrolyte material of the first embodiment may contain one or more anions in addition to or other than the anion of F, so that the ionic conductivity of the solid electrolyte material can be increased. Examples of the anions include those of Cl, Br, I, O, and Se.

A ratio of an amount of substance of the F to a sum of amounts of substance of the anions that form the solid electrolyte material of the first embodiment may be greater than or equal to 0.50 and less than or equal to 1.0 so that the oxidation resistance of the solid electrolyte material can be increased.

The solid electrolyte material of the first embodiment may consist essentially of Li, Zr, Al, and F. "The solid electrolyte material of the first embodiment consists essentially of Li, Zr, Al, and F" means that a ratio of a sum of the amounts of substance (i.e., a molar fraction) of Li, Zr, Al, and F to a sum of the amounts of substance of all the elements that form the solid electrolyte material of the first embodiment is greater than or equal to 90%. For example, the ratio (i.e., the molar fraction) may be greater than or equal to 95%. The solid electrolyte material of the first embodiment may consist only of Li, Zr, Al, and F.

The solid electrolyte material of the first embodiment may contain one or more incidentally included elements. Examples of the elements include hydrogen, oxygen, and nitrogen. These elements may be present in raw material powders of the solid electrolyte material or in an atmosphere in which the solid electrolyte material is produced or stored.

In the solid electrolyte material of the first embodiment, a ratio of the amount of substance of the Li to a sum of the amounts of substance of the Zr and the Al may be greater than or equal to 1.12 and less than or equal to 5.07 so that the ionic conductivity of the solid electrolyte material can be further increased.

The solid electrolyte material of the first embodiment may be a material represented by Formula 1, shown below.

$$Li_{6-(4-x)b}(Zr_{1-x}Al_x)_bF_6 \qquad (1)$$

In Formula 1, inequalities $0 < x < 1$ and $0 < b \leq 1.5$ are satisfied. Solid electrolyte materials having such a crystalline phase have high ionic conductivity.

That is, the composition of the first embodiment may comprise Li, Zr, Al, and F, and the Li, the Zr, the Al, and the F in the composition of the first embodiment may satisfy a molar ratio of Li:Zr:Al:F = [6 - (4 - x)b]: (1 - x)b:xb:6. In this instance, x and y satisfy $0 < x < 1$ and $0 < b \leq 1.5$.

In Formula 1, an inequality $0.01 \leq x \leq 0.99$ may be satisfied so that the ionic conductivity of the solid electrolyte material can be increased. Desirably, an inequality $0.2 \leq x \leq 0.95$ may be satisfied.

In Formula 1, the upper limit and the lower limit of the range of x may be defined by any combination of values selected from 0.01, 0.2, 0.4, 0.5, 0.5, 0.7, 0.8, 0.95, and 0.99.

In Formula 1, an inequality $0.7 \leq b \leq 1.3$ may be satisfied so that the ionic conductivity of the solid electrolyte material can be increased. Desirably, an inequality $0.9 \leq b \leq 1.04$ may be satisfied.

In Formula 1, the upper limit and the lower limit of the range of b may be defined by any combination of values selected from 0.7, 0.8, 0.9, 0.96, 1, 1.04, 1.1, 1.2, and 1.3.

The solid electrolyte material of the first embodiment may be $Li_{2.8}Zr_{0.2}Al_{0.8}F_6$.

The solid electrolyte material of the first embodiment may be crystalline or amorphous.

The solid electrolyte material of the first embodiment has a shape that is not limited. Examples of the shape include needle shapes, spherical shapes, and ellipsoidal shapes. The solid electrolyte material that can be derived from the composition of the first embodiment may be particles. The solid electrolyte material that can be derived from the composition of the first embodiment may have a pellet shape or a plate shape.

<Method for Producing Composition>

The composition of the first embodiment is produced, for example, in the following manner.

A raw material composition including a compound that contains Li and at least one selected from the group consisting of Zr, Al, and F is mixed with a solvent (e.g., an organic solvent) in a mixing device while the raw material composition is micronized. The raw material composition may further include, in addition to the compound, a different compound that, for example, corresponds to the chemical composition of a target solid electrolyte material and serves as a source material of the solid electrolyte material.

For example, when $Li_{2.8}Zr_{0.2}Al_{0.8}F_6$ is the chemical composition of the target solid electrolyte material, LiF, $ZrF_4$, and $AlF_3$ are prepared in a molar ratio of approximately 2.8:0.2:0.8. The raw material powders may be mixed together in a pre-adjusted molar ratio such that a compositional change that can occur in a synthesis process can be offset. The raw material powders (raw material composition) and an organic solvent are added to a mixing device, such as a planetary ball mill, and mixed together while the powders are micronized. That is, wet ball milling is performed. The raw material powders may be premixed before being added to the mixing device.

After the mixing, the balls are removed to give the composition of the first embodiment. Since micronization of the added raw material composition is simultaneously carried out in the above-described process, the particles of the raw material composition dispersed in the solvent in the composition of the first embodiment are expected to have a particle diameter smaller than that of the added raw materials. The particle diameter of the dispersed particles of the raw material composition can be determined, for example, in the same manner as that described above for the determination of the average particle diameter of the compound, which is in the form of particles, present in the composition of the first embodiment.

<Method for Producing Solid Electrolyte Material>

The solid electrolyte material of the first embodiment can be derived from the composition of the first embodiment. For example, the solid electrolyte material can be produced in the following manner.

The composition of the first embodiment is dried at a temperature corresponding to the boiling point of the solvent used, to give a solid. The resulting solid is ground, for example, in a mortar to give a reaction product, which is the solid electrolyte material of the first embodiment.

The resulting reaction product may be heat-treated in a vacuum or an inert atmosphere. The heat treatment is performed, for example, at a temperature of greater than or equal to 100°C and less than or equal to 300°C for 1 hour or more. The heat treatment may be performed in a sealed vessel, such as a quartz tube, so that a compositional change due to the heat treatment can be inhibited.

(Second Embodiment)

A second embodiment will now be described. Descriptions given in the first embodiment may not be repeated.

According to the second embodiment, a battery comprises a positive electrode, an electrolyte layer, and a negative electrode. The electrolyte layer is disposed between the positive electrode and the negative electrode.

At least one selected from the group consisting of the positive electrode, the electrolyte layer, and the negative electrode comprises a solid derived from the composition of the first embodiment (i.e., the solid electrolyte material of the first embodiment).

The battery of the second embodiment has excellent charge-discharge characteristics because the battery includes the solid electrolyte material of the first embodiment.

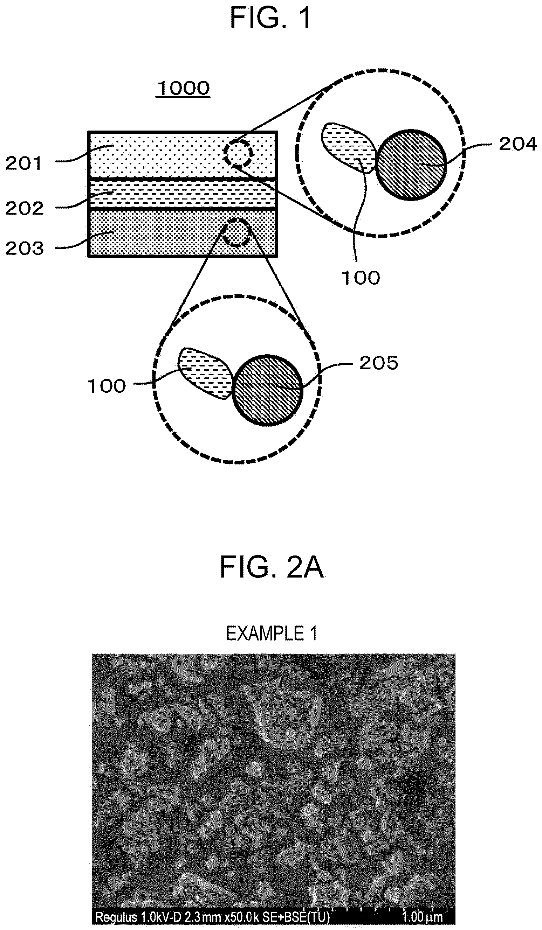

Fig. 1 is a cross-sectional view of a battery 1000 of the second embodiment.

The battery 1000 of the second embodiment includes a positive electrode 201, an electrolyte layer 202, and a negative electrode 203. The electrolyte layer 202 is disposed between the positive electrode 201 and the negative electrode 203.

The positive electrode 201 includes a positive electrode active material 204 and a solid electrolyte 100.

The electrolyte layer 202 contains an electrolyte material.

The negative electrode 203 includes a negative electrode active material 205 and the solid electrolyte 100.

The solid electrolyte 100 contains, for example, the solid electrolyte material of the first embodiment. The solid electrolyte 100 may be particles containing the solid electrolyte material of the first embodiment as a major component. The "particles containing the solid electrolyte material of the first embodiment as a major component" are particles in which the component that is present in the highest amount in terms of a molar ratio is the solid electrolyte material of the first embodiment. The solid electrolyte 100 may be particles made of the solid electrolyte material of the first embodiment.

The positive electrode 201 includes a material capable of occluding and releasing metal ions (e.g., lithium ions). The material is, for example, the positive electrode active material 204.

Examples of the positive electrode active material 204 include lithium transition metal oxides, transition metal fluorides, polyanions, fluorinated polyanionic materials, transition metal sulfides, transition metal oxyfluorides, transition metal oxysulfides, and transition metal oxynitrides. Examples of the lithium transition metal oxides include $Li(Ni,Co,Mn)O_2$, $Li(Ni,Co,Al)O_2$, and $LiCoO_2$.

In the present disclosure, "(A,B,C)" means "at least one selected from the group consisting of A, B, and C".

The positive electrode active material 204 has a shape that is not limited to a particular shape. The positive electrode active material 204 may be particles. The positive electrode active material 204 may have a median diameter of greater than or equal to 0.1 $\mu$m and less than or equal to 100 $\mu$m. When the positive electrode active material 204 has a median diameter of greater than or equal to 0.1 $\mu$m, the positive electrode active material 204 and the solid electrolyte 100 can be favorably dispersed in the positive electrode 201. Consequently, the charge-discharge characteristics of the battery 1000 are improved. When the positive electrode active material 204 has a median diameter of less than or equal to 100 $\mu$m, a lithium diffusion rate in the positive electrode active material 204 is improved. Consequently, a high-power operation of the battery 1000 can be achieved.

The positive electrode active material 204 may have a median diameter greater than that of the solid electrolyte 100. In this case, the positive electrode active material 204 and the solid electrolyte 100 can be favorably dispersed in the positive electrode 201.

In the positive electrode 201, a ratio of a volume of the positive electrode active material 204 to a sum of the volume of the positive electrode active material 204 and a volume of the solid electrolyte 100 may be greater than or equal to 0.30 and less than or equal to 0.95, so that an energy density and power of the battery 1000 can be improved.

The positive electrode active material 204 may include a coating layer formed on at least a portion of a surface of the positive electrode active material 204. For example, the coating layer may be formed on the surface of the positive electrode active material 204 before the positive electrode active material 204 is mixed with a conductive additive and a binding agent. Examples of a coating material that is included in the coating layer include sulfide solid electrolytes, oxide solid electrolytes, and halide solid electrolytes. In instances where the solid electrolyte 100 includes a sulfide solid electrolyte, the coating material may include the solid electrolyte material of the first embodiment so that oxidative decomposition of the sulfide solid electrolyte can be inhibited. In instances where the solid electrolyte 100 includes the solid electrolyte material of the first embodiment, the coating material may include an oxide solid electrolyte so that oxidative decomposition of the solid electrolyte material can be inhibited. The oxide solid electrolyte may be lithium niobate, which exhibits excellent stability at high potentials. The inhibition of oxidative decomposition can in turn inhibit an increase in overvoltage of the battery 1000.

The positive electrode 201 may have a thickness of greater than or equal to 10 $\mu$m and less than or equal to 500 $\mu$m so that the energy density and power of the battery 1000 can be improved.

The electrolyte layer 202 contains an electrolyte material. Examples of the electrolyte material include solid electrolyte materials. The solid electrolyte materials may include the solid electrolyte material of the first embodiment. The electrolyte layer 202 may be a solid electrolyte layer.

The electrolyte layer 202 may contain the solid electrolyte material of the first embodiment in an amount greater than or equal to 50 mass%. The electrolyte layer 202 may contain the solid electrolyte material of the first embodiment in an amount greater than or equal to 70 mass%. The electrolyte layer 202 may contain the solid electrolyte material of the first embodiment in an amount greater than or equal to 90 mass%. The electrolyte layer 202 may be made of only the solid electrolyte material of the first embodiment.

The solid electrolyte material of the first embodiment will hereinafter be referred to as a "first solid electrolyte material". A solid electrolyte material different from the first solid electrolyte material will be referred to as a "second solid electrolyte material".

The electrolyte layer 202 may contain not only the first solid electrolyte material but also a second solid electrolyte material. The first solid electrolyte material and the second solid electrolyte material may be uniformly dispersed in the electrolyte layer 202. A layer made of the first solid electrolyte material and a layer made of the second solid electrolyte material may be stacked on top of each other in a stacking direction of the battery 1000.

The battery of the second embodiment may include the positive electrode 201, a second electrolyte layer, a first electrolyte layer, and the negative electrode 203, which may be disposed in this order. A solid electrolyte material included in the first electrolyte layer may have a reduction potential lower than that of a solid electrolyte material included in the second electrolyte layer. In this case, the solid electrolyte material included in the second electrolyte layer can be used without being reduced. As a result, charge-discharge efficiency of the battery 1000 can be improved. For example, in instances where the second electrolyte layer contains the first solid electrolyte material, the first electrolyte layer may contain a sulfide solid electrolyte so that reductive decomposition of the solid electrolyte material can be inhibited. In this case, the charge-discharge efficiency of the battery 1000 can be improved. The second electrolyte layer may contain the first solid electrolyte material. The first solid electrolyte material has high oxidation resistance, and, consequently, a battery having excellent charge-discharge characteristics can be realized.

The electrolyte layer 202 may be made of only the second solid electrolyte material.

The electrolyte layer 202 may have a thickness of greater than or equal to 1 $\mu$m and less than or equal to 1000 $\mu$m. When the electrolyte layer 202 has a thickness of greater than or equal to 1 $\mu$m, short-circuiting between the positive electrode 201 and the negative electrode 203 is unlikely to occur. When the electrolyte layer 202 has a thickness of less than or equal to 1000 $\mu$m, a high-power operation of the battery 1000 can be achieved.

Examples of the second solid electrolyte material include $Li_2MgX_4$, $Li_2FeX_4$, $Li(Al,Ga,In)X_4$, $Li_3(Al,Ga,In)X_6$, and LiI. X is at least one selected from the group consisting of F, Cl, Br, and I.

The electrolyte layer 202 may have a thickness of greater than or equal to 1 $\mu$m and less than or equal to 1000 $\mu$m so that the energy density and power of the battery 1000 can be improved.

The negative electrode 203 includes a material capable of occluding and releasing metal ions (e.g., lithium ions). The material is, for example, the negative electrode active material 205.

Examples of the negative electrode active material 205 include metal materials, carbon materials, oxides, nitrides, tin compounds, and silicon compounds. The metal materials may be elemental metals or alloys. Examples of the metal materials include lithium metals and lithium alloys. Examples of the carbon materials include natural graphite, coke, partially graphitized carbon, carbon fibers, spherical carbon, artificial graphite, and amorphous carbon. The negative electrode active material may be, for example, silicon (i.e., Si), tin (i.e., Sn), a silicon compound, or a tin compound; these are suitable from the standpoint of a capacity density.

The negative electrode active material 205 may be selected in consideration of the reduction resistance of the solid electrolyte material that is included in the negative electrode 203. For example, in instances where the negative electrode 203 includes the first solid electrolyte material, the negative electrode active material 205 may be a material capable of occluding and releasing lithium ions at greater than or equal to 0.27 V versus lithium. Examples of such negative electrode active materials include titanium oxides, indium metal, and lithium alloys. Examples of the titanium oxides include $Li_4Ti_5O_{12}$, $LiTi_2O_4$, and $TiO_2$. Using any of these negative electrode active materials can inhibit the first solid electrolyte material included in the negative electrode 203 from undergoing reductive decomposition. As a result, the charge-discharge efficiency of the battery 1000 can be improved.

The negative electrode active material 205 has a shape that is not limited to a particular shape. The negative electrode active material 205 may be particles. The negative electrode active material 205 may have a median diameter of greater than or equal to 0.1 $\mu$m and less than or equal to 100 $\mu$m. When the negative electrode active material 205 has a median diameter of greater than or equal to 0.1 $\mu$m, the negative electrode active material 205 and the solid electrolyte 100 can be favorably dispersed in the negative electrode 203. Consequently, the charge-discharge characteristics of the battery 1000 are improved. When the negative electrode active material 205 has a median diameter of less than or equal to 100 $\mu$m, a lithium diffusion rate in the negative electrode active material 205 is improved. Consequently, a high-power operation of the battery 1000 can be achieved.

The negative electrode active material 205 may have a median diameter greater than that of the solid electrolyte 100. In this case, the negative electrode active material 205 and the solid electrolyte 100 can be favorably dispersed in the negative electrode 203.

In the negative electrode 203, a ratio of a volume of the negative electrode active material 205 to a sum of the volume of the negative electrode active material 205 and the volume of the solid electrolyte 100 may be greater than or equal to 0.30 and less than or equal to 0.95, so that the energy density and power of the battery 1000 can be improved.

The negative electrode 203 may have a thickness of greater than or equal to 10 $\mu$m and less than or equal to 500 $\mu$m so that the energy density and power of the battery 1000 can be improved.

At least one selected from the group consisting of the positive electrode 201, the electrolyte layer 202, and the negative electrode 203 may include a second solid electrolyte material so that the ionic conductivity, chemical stability, and electrochemical stability can be increased.

The second solid electrolyte material may be a sulfide solid electrolyte.

Examples of the sulfide solid electrolyte include $Li_2S\text{-}P_2S_5$, $Li_2S\text{-}SiS_2$, $Li_2S\text{-}B_2S_3$, $Li_2S\text{-}GeS_2$,

$Li_{3.25}Ge_{0.25}P_{0.75}S_4$, and $Li_{10}GeP_2S_{12}$.

In instances where the electrolyte layer 202 contains the first solid electrolyte material, the negative electrode 203 may contain a sulfide solid electrolyte so that reductive decomposition of the solid electrolyte material can be inhibited. When the negative electrode active material is covered with a sulfide solid electrolyte, which is electrochemically stable, contact of the first solid electrolyte material with the negative electrode active material can be inhibited. As a result, an internal resistance of the battery 1000 can be reduced.

The second solid electrolyte material may be an oxide solid electrolyte.

Examples of the oxide solid electrolyte include

(i) NASICON-type solid electrolytes, such as $LiTi_2(PO_4)_3$ and element-substituted derivatives thereof,
(ii) perovskite-type solid electrolytes, such as $(LaLi)TiO_3$,
(iii) LISICON-type solid electrolytes, such as $Li_{14}ZnGe_4O_{16}$, $Li_4SiO_4$, $LiGeO_4$, and element-substituted derivatives thereof,
(iv) garnet-type solid electrolytes, such as $Li_7La_3Zr_2O_{12}$ and element-substituted derivatives thereof, and
(v) $Li_3PO_4$ and N-substituted derivatives thereof.

As stated above, the second solid electrolyte material may be a halide solid electrolyte.

Examples of the halide solid electrolyte include $Li_2MgX_4$, $Li_2FeX_4$, $Li(Al,Ga,In)X_4$, $Li_3(Al,Ga,In)X_6$, and LiI. X is at least one selected from the group consisting of F, Cl, Br, and I.

Other examples of the halide solid electrolyte are compounds represented by $Li_aMe_bY_cZ_6$. In the formula, a + mb + 3c = 6 and c > 0 are satisfied. Me is at least one selected from the group consisting of metalloid elements and metal elements other than Li or Y. Z is at least one selected from the group consisting of F, Cl, Br, and I. m represents the valence of Me. The metalloid elements are B, Si, Ge, As, Sb, and Te. The metal elements are all the elements (excluding hydrogen) from Groups 1 to 12 of the periodic table and all the elements (excluding B, Si, Ge, As, Sb, Te, C, N, P, O, S, and Se) from Groups 13 to 16 of the periodic table.

Me may be at least one selected from the group consisting of Mg, Ca, Sr, Ba, Zn, Sc, Al, Ga, Bi, Zr, Hf, Ti, Sn, Ta, and Nb, so that the ionic conductivity of the halide solid electrolyte can be improved.

The halide solid electrolyte may be $Li_3YCl_6$ or $Li_3YBr_6$.

The second solid electrolyte material may be an organic polymer solid electrolyte.

Examples of the organic polymer solid electrolyte include compounds of a polymeric compound and a lithium salt.

The polymeric compound may have an ethylene oxide structure. Polymeric compounds having an ethylene oxide structure can contain large amounts of a lithium salt and, therefore, can further increase the ionic conductivity.

Examples of the lithium salt include $LiPF_6$, $LiBF_4$, $LiSbF_6$, $LiAsF_6$, $LiSO_3CF_3$, $LiN(SO_2CF_3)_2$, $LiN(SO_2C_2F_5)_2$, $LiN(SO_2CF_3)(SO_2C_4F_9)$, and $LiC(SO_2CF_3)_3$. One lithium salt selected from these may be used alone. Alternatively, a mixture of two or more lithium salts selected from these may be used.

At least one selected from the group consisting of the positive electrode 201, the electrolyte layer 202, and the negative electrode 203 may include a nonaqueous electrolyte solution, a gel electrolyte, or an ionic liquid so that the transfer of lithium ions can be facilitated to improve the power characteristics of the battery.

The nonaqueous electrolyte solution includes a nonaqueous solvent and a lithium salt dissolved in the nonaqueous solvent.

Examples of the nonaqueous solvent include cyclic carbonate solvents, chain carbonate solvents, cyclic ether solvents, chain ether solvents, cyclic ester solvents, chain ester solvents, and fluorinated solvents. Examples of the cyclic carbonate solvents include ethylene carbonate, propylene carbonate, and butylene carbonate. Examples of the chain carbonate solvents include dimethyl carbonate, ethyl methyl carbonate, and diethyl carbonate. Examples of the cyclic ether solvents include tetrahydrofuran, 1,4-dioxane, and 1,3-dioxolane. Examples of the chain ether solvents include 1,2-dimethoxyethane and 1,2-diethoxyethane. Examples of the cyclic ester solvents include γ-butyrolactone. Examples of the chain ester solvents include methyl acetate. Examples of the fluorinated solvents include fluoroethylene carbonate, fluoromethyl propionate, fluorobenzene, fluoroethyl methyl carbonate, and fluorodimethylene carbonate. One nonaqueous solvent selected from these may be used alone. Alternatively, a combination of two or more nonaqueous solvents selected from these may be used.

Examples of the lithium salt include $LiPF_6$, $LiBF_4$, $LiSbF_6$, $LiAsF_6$, $LiSO_3CF_3$, $LiN(SO_2CF_3)_2$, $LiN(SO_2C_2F_5)_2$, $LiN(SO_2CF_3)(SO_2C_4F_9)$, and $LiC(SO_2CF_3)_3$. One lithium salt selected from these may be used alone. Alternatively, a mixture of two or more lithium salts selected from these may be used. A concentration of the lithium salt is in a range of, for example, greater than or equal to 0.5 mol/L and less than or equal to 2 mol/L.

The gel electrolyte may be a polymeric material impregnated with a nonaqueous electrolyte solution. Examples of the polymeric material include polyethylene oxide, polyacrylonitrile, polyvinylidene fluoride, polymethylmethacrylate, and polymers having an ethylene oxide linkage.

Examples of a cation included in the ionic liquid include

(i) aliphatic chain quaternary salts, such as tetraalkylammoniums or tetraalkylphosphoniums,

(ii) aliphatic cyclic ammoniums, such as pyrrolidiniums, morpholiniums, imidazoliniums, tetrahydropyrimidiniums, piperaziniums, and piperidiniums, and

(iii) nitrogen-containing heterocyclic aromatic cations, such as pyridiniums and imidazoliums.

Examples of an anion included in the ionic liquid include $PF_6^-$, $BF_4^-$, $SbF_6^-$, $AsF_6^-$, $SO_3CF_3^-$, $N(SO_2CF_3)_2^-$, $N(SO_2C_2F_5)_2^-$, $N(SO_2CF_3)(SO_2C_4F_9)^-$, and $C(SO_2CF_3)_3^-$.

The ionic liquid may contain a lithium salt.

At least one selected from the group consisting of the positive electrode 201, the electrolyte layer 202, and the negative electrode 203 may include a binding agent so that adhesion between particles can be improved.

Examples of the binding agent include polyvinylidene fluoride, polytetrafluoroethylene, polyethylene, polypropylene, aramid resins, polyamides, polyimides, polyamide-imides, polyacrylonitrile, polyacrylic acids, poly(methyl acrylate), poly(ethyl acrylate), poly(hexyl acrylate), polymethacrylic acids, poly(methyl methacrylate), poly(ethyl methacrylate), poly(hexyl methacrylate), polyvinyl acetate, polyvinylpyrrolidone, polyethers, polyether sulfones, hexafluoropolypropylene, styrene butadiene rubber, and carboxymethyl cellulose. Other examples of the binding agent are copolymers. For example, the binding agent may be a copolymer of two or more materials selected from the group consisting of tetrafluoroethylene, hexafluoroethylene, hexafluoropropylene, perfluoroalkyl vinyl ether, vinylidene fluoride, chlorotrifluoroethylene, ethylene, propylene, pentafluoropropylene, fluoromethyl vinyl ether, acrylic acids, and hexadiene. The binding agent may be a mixture of two or more materials selected from these.

At least one selected from the positive electrode 201 and the negative electrode 203 may include a conductive additive so that electron conductivity can be improved.

Examples of the conductive additive include

(i) graphites, such as natural graphite and artificial graphite,

(ii) carbon blacks, such as acetylene black and Ketjen black,

(iii) conductive fibers, such as carbon fibers and metal fibers,

(iv) carbon fluoride,

(v) metal powders, such as aluminum powders,

(vi) conductive whiskers, such as zinc oxide whiskers and potassium titanate whiskers,

(vii) conductive metal oxides, such as titanium oxide, and

(viii) conductive polymers, such as polyaniline, polypyrrole, and polythiophene.

In instances where cost reduction is to be achieved, a conductive additive among those of (i) or (ii) may be used.

Examples of a shape of the battery of the second embodiment include coin shapes, cylindrical shapes, prismatic shapes, sheet shapes, button shapes, flat shapes, and stack shapes.

The battery of the second embodiment may be manufactured, for example, as follows. Materials for forming the positive electrode, materials for forming the electrolyte layer, and materials for forming the negative electrode are prepared, and a stack in which the positive electrode, the electrolyte layer, and the negative electrode are disposed in this order is produced with a known method.

EXAMPLES

The present disclosure will now be described in more detail with reference to Examples and a Comparative Example.

EXAMPLE 1

(Preparation of Composition)

In an argon atmosphere with a dew point of -60°C or less (hereinafter referred to as a dry argon atmosphere), raw material powders of LiF, $ZrF_4$, and $AlF_3$ were prepared in a molar ratio of LiF:$ZrF_4$:$AlF_3$ = 2.8:0.2:0.8. The raw material powders were added to a 45-cc planetary ball mill pot along with 1 mmφ balls (25 g). An organic solvent, namely, γ-butyrolactone (GBL), was added dropwise to the pot such that a solids content of 50% was achieved. The solids content is calculated by {(mass of the raw materials added)/(mass of the raw materials added + mass of the solvent added)} × 100. A milling process was performed in a planetary ball mill at 500 rpm for 12 hours. After the milling process, the balls were removed to give a composition of Example 1.

(Evaluation of Particle Diameter of Dispersed Particles)

GBL was added to the composition of Example 1 such that a solids content of 10% was achieved, and then, the composition was thoroughly stirred. The composition was diluted and then dried under vacuum at 50°C to extract the dispersed particles. If a high level of heat is applied for the removal of the solvent, the particles are fused to one another when the composition becomes a solid, and, consequently, accurate evaluation of the particle diameter can become difficult. Accordingly, vacuum drying is desirable for the evaluation of the particle diameter of the dispersed particles.

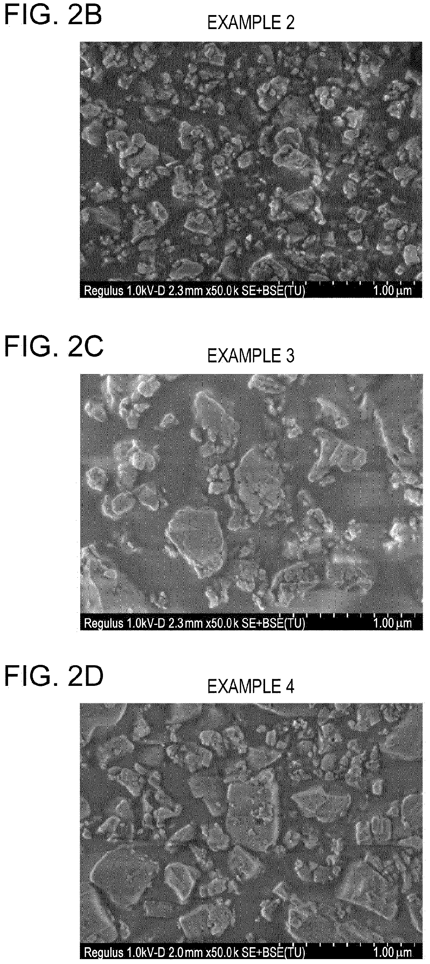

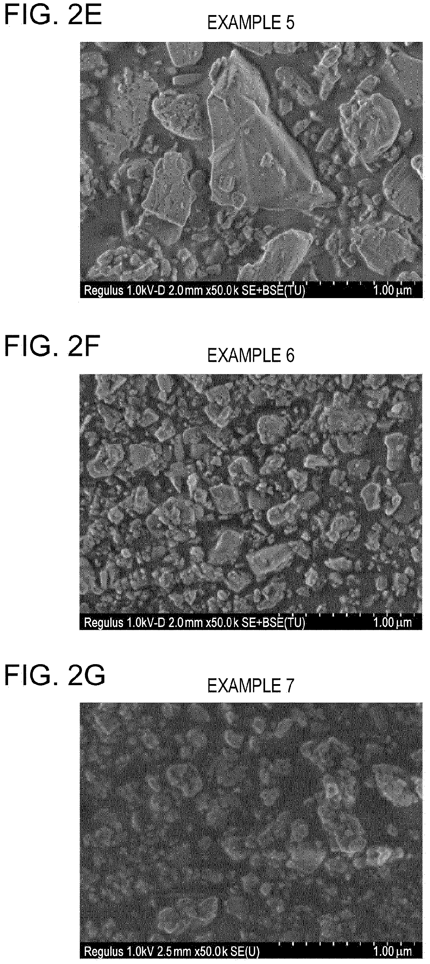

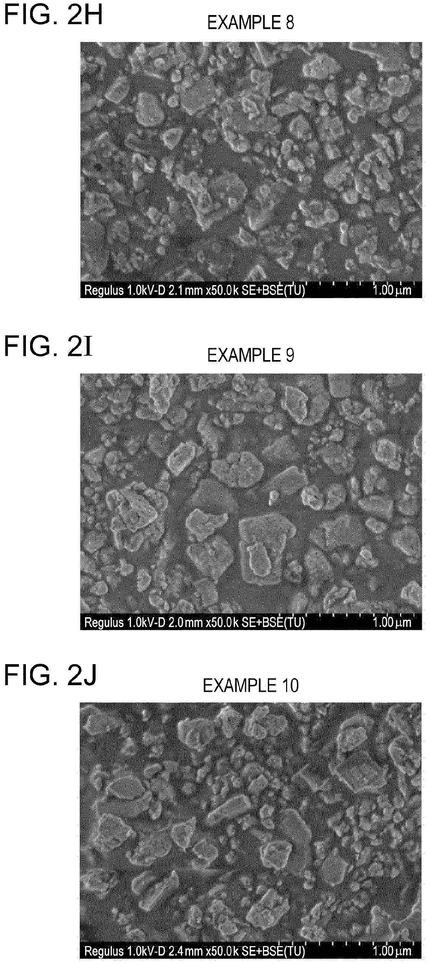

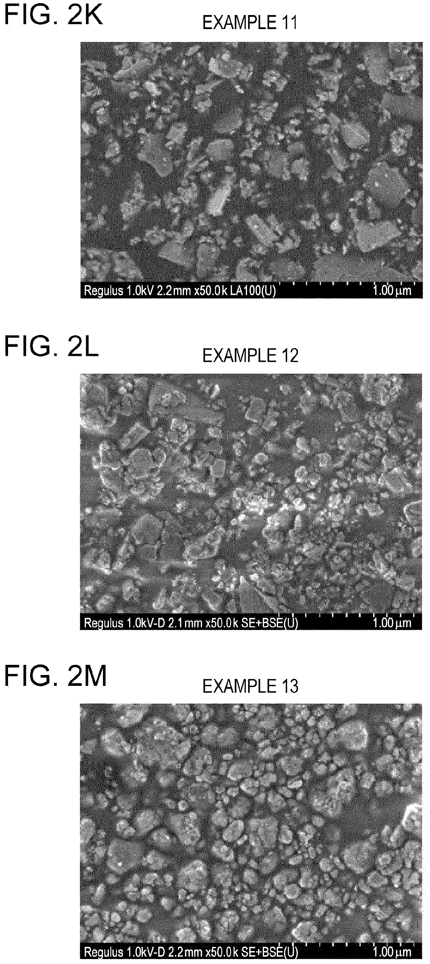

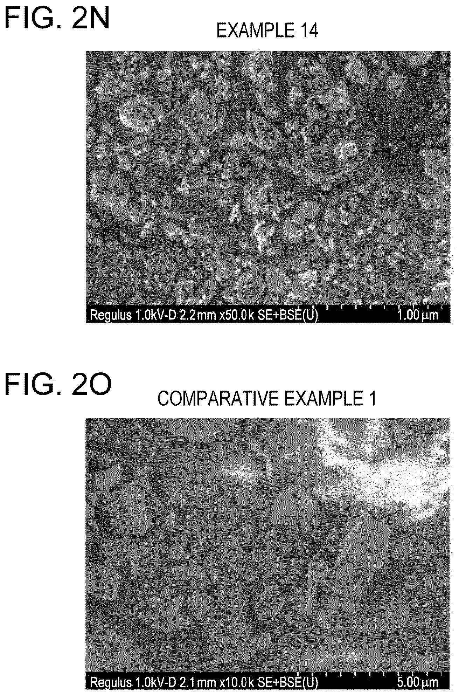

The extracted dispersed particles were smoothed in a mortar as necessary so that the boundaries of the particles could be easily seen. The morphological examination was carried out with an SEM (Regulus 8230, Hitachi High-Tech Corporation). In an acquired SEM image, 40 primary particles were randomly selected. Then, a unidirectional diameter of the selected primary particles was measured. Of the particle diameters of the 40 particles, the 10 smallest particle diameters were excluded from consideration, and the average particle diameter was calculated by simply averaging the particle diameters of the remaining 30 particles. The magnification used for the examination was $50,000\times$. Fig. 2A is an SEM image acquired to evaluate the particle diameter of particles present in the composition of Example 1. The average particle diameter of the dispersed particles of Example 1 was 0.127 μm.

(Preparation of Solid Electrolyte Material)

The composition of Example 1 was dried in a mantle heater at 200°C for 1 hour under a nitrogen flow. The resulting solid was ground in a mortar to give a powder of a solid electrolyte material of Example 1. The solid electrolyte material of Example 1 had a chemical composition represented by $Li_{2.8}Zr_{0.2}Al_{0.8}F_6$.

(Evaluation of Ionic Conductivity)

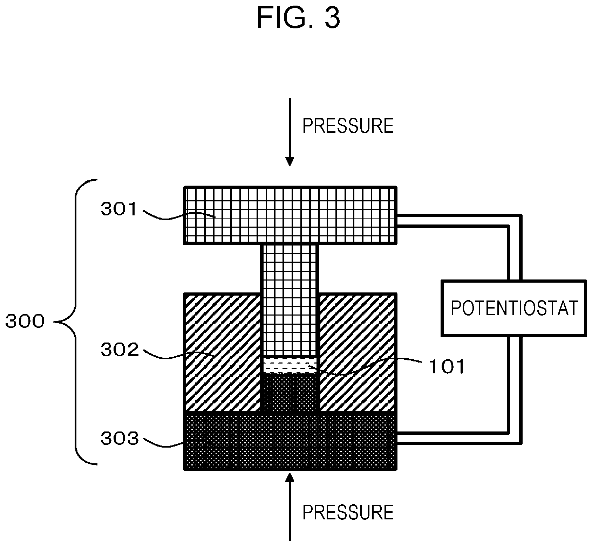

Fig. 3 is a schematic diagram of a pressure molding die 300, which was used for evaluating the ionic conductivity of solid electrolyte materials.

The pressure molding die 300 included an upper punch 301, a die 302, and a lower punch 303. The die 302 was made of an insulating polycarbonate. The upper punch 301 and the lower punch 303 were made of electron-conductive stainless steel.

With the pressure molding die 300 illustrated in Fig. 3, the ionic conductivity of the solid electrolyte material of Example 1 was evaluated in the following manner.

In a dry atmosphere with a dew point of -30°C or less, the powder of the solid electrolyte material of Example 1 was loaded into the pressure molding die 300. In the pressure molding die 300, a pressure of 400 MPa was applied to the solid electrolyte material of Example 1 with the upper punch 301 and the lower punch 303.

In the state in which the pressure was applied, the upper punch 301 and the lower punch 303 were connected to a potentiostat (VSP-300, Bio-Logic) equipped with a frequency response analyzer. The upper punch 301 was connected to a working electrode and a potential measurement terminal. The lower punch 303 was connected to a counter electrode and a reference electrode. An impedance of the solid electrolyte material was measured at room temperature with an electrochemical impedance measurement method.

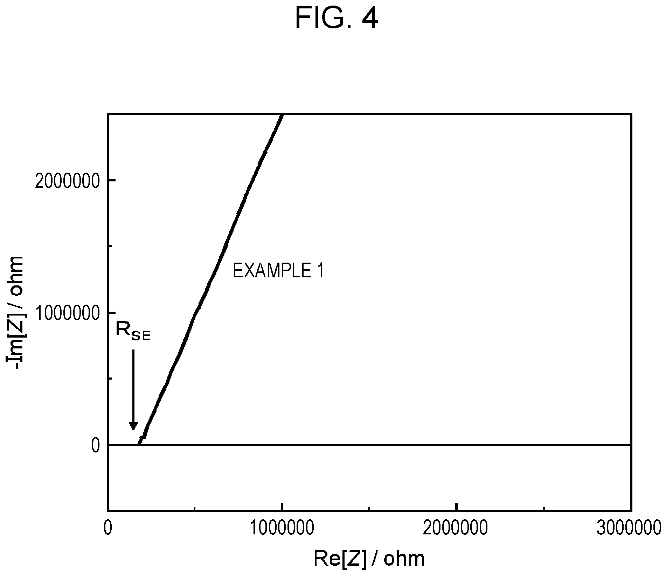

Fig. 4 is a graph showing a Cole-Cole plot obtained in the impedance measurement performed on the solid electrolyte material of Example 1.

In Fig. 4, the real value of the impedance at a measurement point at which the absolute value of the phase of the complex impedance was a minimum was considered to be a resistance value with respect to the ion conduction of the solid electrolyte material. In Fig. 4, see an arrow $R_{SE}$, which indicates the real value. The ionic conductivity was calculated by using the resistance value, according to Equation 2, shown below.

$$\sigma = (R_{SE} \times S/t)^{-1} \quad (2)$$

σ is the ionic conductivity. S is an area of contact of the solid electrolyte material with the upper punch 301. That is, S is equal to a cross-sectional area of the hollow portion of the die 302, illustrated in Fig. 3. $R_{SE}$ is the resistance value of the solid electrolyte material as determined by the impedance measurement. t is a thickness of the solid electrolyte material. That is, t is a thickness of a layer formed of a powder 101 of the solid electrolyte material, illustrated in Fig. 3.

The ionic conductivity of the solid electrolyte material derived from the composition of Example 1, which was measured at 25°C, was $4.92\times10^{-7}$ S/cm.

(Preparation of Battery)

In a dry argon atmosphere, the solid electrolyte material of Example 1 and LiCoO$_2$, which is an active material, were prepared in a volume ratio of 30:70. The materials were mixed in an agate mortar. In this manner, a positive electrode mixture was prepared.

In an insulating cylinder having an inside diameter of 9.5 mm, Li$_3$PS$_4$ (57.41 mg), the solid electrolyte material of Example 1 (26 mg), and the positive electrode mixture (9.1 mg) were stacked in this order. A pressure of 300 MPa was applied to the resulting multilayer body to form a first electrolyte layer, a second electrolyte layer, and a positive electrode. That is, the second electrolyte layer, which was formed from the solid electrolyte material of Example 1, was held between the first electrolyte layer and the positive electrode. The first electrolyte layer had a thickness of 450 $\mu$m, and the second electrolyte layer had a thickness of 150 $\mu$m.

Next, metallic Li (thickness: 200 $\mu$m) was stacked on the first electrolyte layer. A pressure of 80 MPa was applied to the resulting multilayer body to form a negative electrode.

Next, current collectors formed from stainless steel were attached to the positive electrode and the negative electrode, and current collector leads were attached to the current collectors.

Lastly, the interior of the insulating cylinder was isolated from the ambient environment with an insulating ferrule, and thus, the interior of the cylinder was sealed. In this manner, a battery of Example 1 was produced.

(Charge-Discharge Test)

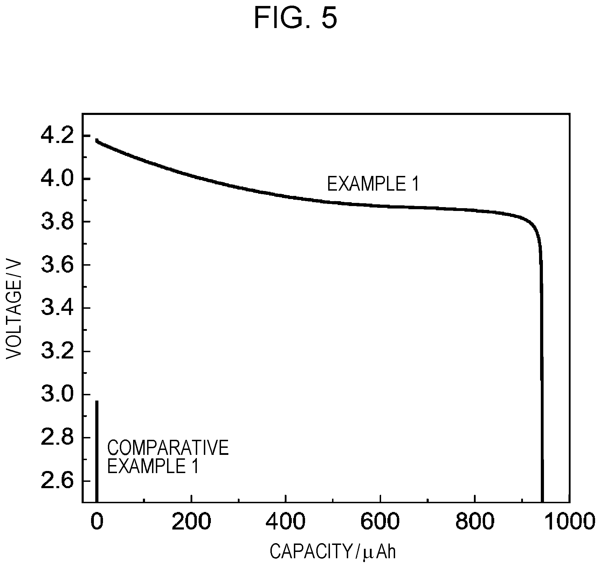

Fig. 5 is a graph showing an initial discharge characteristic of the battery of Example 1. The initial charge-discharge characteristic was measured in the following manner.

The battery of Example 1 was placed in a constant-temperature oven at 85°C.

The battery of Example 1 was charged at a current density of 13.5 $\mu$A/cm$^2$ until a voltage of 4.2 V was reached. The current density corresponds to a 0.01 C rate.

Next, the battery of Example 1 was discharged at a current density of 13.5 $\mu$A/cm$^2$ until a voltage of 2.5 V was reached.

The result of the charge-discharge test was that the battery of Example 1 had an initial discharge capacity of 943 $\mu$Ah.

EXAMPLES 2 to 14

(Preparation of Composition and Solid Electrolyte Material)

In Examples 2 to 14, raw material powders of LiF, ZrF$_4$, and AlF$_3$ were prepared in a molar ratio of LiF:ZrF$_4$:AlF$_3$ = 2.8:0.2:0.8.

Regarding the milling process of the composition, Table 1 shows the solvent type, the solids content, the ball diameter, the ball quantity, and the process time.

Compositions of Examples 2 to 13 were prepared in the same manner as in Example 1, except that the conditions shown in Table 1 were used.

In Example 14, raw material powders of LiF, ZrF$_4$, and AlF$_3$ were prepared in a molar ratio of LiF:ZrF$_4$:AlF$_3$ = 2.8:0.2:0.8. The raw material powders were subjected to a milling process, which was performed in a planetary ball mill at 500 rpm for 12 hours with ethanol being used as a solvent. Subsequently, the balls were removed to give a slurry, which was dried at 100°C for 1 hour. In this manner, a micronized raw material mixture (hereinafter referred to as a "micronized raw material") was prepared. The micronized raw material and GBL were added to a screw-cap tube such that a solids content of 30% was achieved, and the contents were then stirred with a stir bar. In this manner, a composition of Example 14 was prepared.

(Evaluation of Dispersed Particles)

The dispersed particles in the compositions of Examples 2 to 14 were extracted and evaluated with an SEM in the same manner as in Example 1. The particle diameters of the dispersed particles are shown in Table 1. Figs. 2B to 2N show SEM images acquired to evaluate the particle diameter of the particles present in the compositions of Examples 2 to 14.

(Preparation of Solid Electrolyte Material)

Solid electrolyte materials of Examples 2 to 14 were prepared from the compositions of Examples 2 to 14 in the same manner as in Example 1, except that the drying conditions shown in Table 1 were used.

(Evaluation of Ionic Conductivity)

The ionic conductivity of the solid electrolyte materials of Examples 2 to 14 was measured in the same manner as in Example 1. The results are shown in Table 1.

(Charge-Discharge Test)

Batteries of Examples 2 to 13 were produced with the solid electrolyte materials of Examples 2 to 14 in the same manner as in Example 1.

A charge-discharge test was conducted on the batteries of Examples 2 to 14 in the same manner as in Example 1. The result was that the batteries of Examples 2 to 14 were favorably charged and discharged as with the battery of Example 1.

REFERENCE EXAMPLE 1

In a dry argon atmosphere, raw material powders of LiF, $ZrF_4$, and $AlF_3$ were prepared in a molar ratio of LiF:$ZrF_4$:$AlF_3$ = 2.8:0.2:0.8. The raw material powders were ground and mixed in a mortar. The resulting mixed powder and GBL were added to a screw-cap tube such that a solids content of 30% was achieved, and the contents were then stirred with a stir bar. In this manner, a composition of Reference Example 1 was prepared.

As described, ball milling was not performed in Reference Example 1.

The composition of Reference Example 1 was dried in the same manner as in Example 1, to give a solid electrolyte material of Reference Example 1.

In Reference Example 1, the ionic conductivity of the solid electrolyte material and the particle diameter of the dispersed particles were measured in the same manner as in Example 1. Fig. 2O is an SEM image acquired to evaluate the particle diameter of the particles present in the composition of Reference Example 1.

The ionic conductivity was measured at 25°C but was unmeasurable because the resistance value was excessively high. This is believed to be because the particles of the compound present in the composition of Reference Example 1 had a large average particle diameter of greater than or equal to 0.68 $\mu$m, and, consequently, the formation of a compound with a target chemical composition (i.e., a solid electrolyte material) was not achieved.

COMPARATIVE EXAMPLE 1

$LiBF_4$ was used as a solid electrolyte material, and the ionic conductivity was measured in the same manner as in Example 1, described above. The result was that the ionic conductivity, which was measured at 25°C, was $6.67 \times 10^{-9}$ S/cm.

A battery of Comparative Example 1 was produced in the same manner as in Example 1, except that the solid electrolyte material of Comparative Example 2 was used as a solid electrolyte for use in the positive electrode mixture and the electrolyte layer.

A charge-discharge test was conducted on the battery of Comparative Example 1 in the same manner as in Example 1. Fig. 5 is a graph showing an initial discharge characteristic of the battery of Comparative Example 1. The result was that the initial discharge capacity of the battery of Comparative Example 1 was less than or equal to 0.01 $\mu$Ah. That is, the battery of Comparative Example 1 was not successfully charged or discharged.

[Table 1]

| | Chemical composition | Method used to prepare composition | Solvent | Solids content [%] | Ball diameter [mm] | Ball quantity [g] | Synthesis time [h] | Drying conditions | Particle diameter of dispersed particles [μm] | Ionic conductivity [S/cm] |
|---|---|---|---|---|---|---|---|---|---|---|
| Example 1 | $Li_{2.8}Zr_{0.2}Al_{0.8}F_6$ | wet BM | GBL | 50 | 1 | 25 | 12 | 200°C,1h | 0.127 | $4.92\times10^{-7}$ |
| Example 2 | $Li_{2.8}Zr_{0.2}Al_{0.8}F_6$ | wet BM | GBL | 50 | 0.5 | 25 | 12 | 200°C,1h | 0.103 | $1.90\times10^{-7}$ |
| Example 3 | $Li_{2.8}Zr_{0.2}Al_{0.8}F_6$ | wet BM | GBL | 50 | 3 | 25 | 12 | 200°C,1h | 0.194 | $4.29\times10^{-7}$ |
| Example 4 | $Li_{2.8}Zr_{0.2}Al_{0.8}F_6$ | wet BM | GBL | 50 | 2 | 25 | 4 | 200°C,1h | 0.185 | $138\times10^{-7}$ |
| Example 5 | $Li_{2.8}Zr_{0.2}Al_{0.8}F_6$ | wet BM | GBL | 50 | 3 | 25 | 4 | 200°C,1h | 0.229 | $7.33\times10^{-8}$ |
| Example 6 | $Li_{2.8}Zr_{0.2}Al_{0.8}F_6$ | wet BM | GBL | 50 | 1 | 40 | 12 | 200°C,1h | 0.122 | $1.77\times10^{-7}$ |
| Example 7 | $Li_{2.8}Zr_{0.2}Al_{0.8}F_6$ | wet BM | GBL | 50 | 1 | 25 | 48 | 200°C,1h | 0.115 | $180\times10^{-7}$ |
| Example 8 | $Li_{2.8}Zr_{0.2}Al_{0.8}F_6$ | wet BM | GBL | 50 | 3 | 25 | 48 | 200°C,1h | 0.158 | $3.43\times10^{-7}$ |
| Example 9 | $Li_{2.8}Zr_{0.2}Al_{0.8}F_6$ | wet BM | butyl acetate | 25 | 1 | 25 | 12 | 120°C,1h →200°C, 1h | 0.169 | $1.78\times10^{-8}$ |
| Example 10 | $Li_{2.8}Zr_{0.2}Al_{0.8}F_6$ | wet BM | propylene carbonate | 30 | 1 | 25 | 12 | 200°C,1h →230°C, 1h | 0.154 | $9.33\times10^{-9}$ |
| Example 11 | $Li_{2.8}Zr_{0.2}Al_{0.8}F_6$ | wet BM | ethanol | 30 | 1 | 25 | 12 | 100°C, 1h →200°C, 1h | 0.145 | $2.98\times10^{-8}$ |
| Example 12 | $Li_{2.8}Zr_{0.2}Al_{0.8}F_6$ | wet BM | dimethyl sulfoxide | 30 | 1 | 25 | 12 | 190°C,1h | 0.127 | $1.35\times10^{-7}$ |
| Example 13 | $Li_{2.8}Zr_{0.2}Al_{0.8}F_6$ | wet BM | tetralin | 20 | 1 | 25 | 12 | 210°C,1h | 0.117 | $1.08\times10^{-8}$ |
| Example 14 | $Li_{2.8}Zr_{0.2}Al_{0.8}F_6$ | dispersing of micronized raw materials | GBL | 30 | - | - | - | 200°C,1h | 0.124 | $7.09\times10^{-8}$ |
| Reference Example 1 | $Li_{2.8}Zr_{0.2}Al_{0.8}F_6$ | dispersing of roughly ground raw materials | GBL | 30 | - | - | - | 200°C,1h | 0.680 | unmeasurable |

(continued)

| | Chemical composition | Method used to prepare composition | Solvent | Solids content [%] | Ball diameter [mm] | Ball quantity [g] | Synthesis time [h] | Drying conditions | Particle diameter of dispersed particles [$\mu$m] | Ionic conductivity [S/cm] |
|---|---|---|---|---|---|---|---|---|---|---|
| Comparative Example 1 | $LiBF_4$ | - | - | - | - | - | - | - | - | $6.67 \times 10^{-9}$ |

<Discussion>

The solids resulting from the drying of the compositions of Examples 1 to 14, that is, the solid electrolyte materials of Examples 1 to 14, had an ionic conductivity of greater than or equal to $7 \times 10^{-9}$ S/cm at room temperature.

Note that the compositions of Examples 1 to 13 were prepared by carrying out the grinding process of the raw material compositions by wet ball milling in the GBL, which was the solvent that constituted the composition, whereas the composition of Example 14 was prepared by dispersing the particles of the pre-micronized raw material composition in the GBL, which was the solvent that constituted the composition. It was found that the solid electrolyte material prepared with the composition of Example 14 had an ionic conductivity comparable to those of the solid electrolyte materials prepared with the compositions of Examples 1 to 13. This confirmed that performing the grinding of the raw material composition in the solvent that constitutes the composition is not essential and that compositions that are prepared by dispersing a pre-micronized raw material composition in the solvent are also suitable for improving the ionic conductivity of solid electrolyte materials.

In Reference Example 1, the powder prepared by drying the composition was not a compound having a target chemical composition, as stated above, and, therefore, its lithium ion conductivity could not be examined.

Accordingly, it can be said that when the particles dispersed in the composition have a small particle diameter, the formation of a solid electrolyte material can be accomplished efficiently.

The solid electrolyte materials of Examples 1 to 14 are sulfur-free and, therefore, do not produce hydrogen sulfide.

As described above, compositions according to the present disclosure can provide solid electrolyte materials having high lithium ion conductivity and are suitable for providing batteries that can be favorably charged and discharged.

Industrial Applicability

Compositions of the present disclosure are utilized, for example, in all-solid-state lithium ion secondary batteries.

Reference Signs List

| | |
|---|---|
| 100 | solid electrolyte |
| 101 | powder of solid electrolyte material |
| 201 | positive electrode |
| 202 | electrolyte layer |
| 203 | negative electrode |
| 204 | positive electrode active material |
| 205 | negative electrode active material |
| 300 | pressure molding die |
| 301 | upper punch |
| 302 | die |
| 303 | lower punch |
| 1000 | battery |

**Claims**

1. A composition comprising:

   a compound comprising Li and at least one selected from the group consisting of Zr, Al, and F; and
   a solvent, wherein
   the compound is in a form of particles and has an average particle diameter of less than 0.68 $\mu$m.

2. The composition according to claim 1, wherein the composition comprises, as the compound, at least one selected from the group consisting of LiF, $Li_2ZrF_6$, and $Li_3AlF_6$.

3. The composition according to claim 1 or 2, wherein

   the composition comprises Li, Zr, Al, and F, and

the Li, the Zr, the Al, and the F satisfy a molar ratio of Li:Zr:Al:F = [6 - (4 - x)b]: (1 - x)b:xb:6, where $0 < x < 1$ and $0 < b \leq 1.5$ are satisfied.

4. The composition according to any one of claims 1 to 3, wherein the solvent comprises a compound having at least one functional group selected from the group consisting of ester groups and hydroxy groups.

5. The composition according to any one of claims 1 to 3, wherein the solvent comprises at least one selected from the group consisting of $\gamma$-butyrolactone, propylene carbonate, butyl acetate, ethanol, dimethyl sulfoxide, and tetralin.

6. The composition according to any one of claims 1 to 5, wherein the compound is a source material of a solid electrolyte material.

7. A battery comprising:

   a positive electrode;
   a negative electrode; and
   an electrolyte layer disposed between the positive electrode and the negative electrode, wherein
   at least one selected from the group consisting of the positive electrode, the negative electrode, and the electrolyte layer comprises a solid derived from the composition according to any one of claims 1 to 6.

8. A method for producing the composition according to any one of claims 1 to 6 comprising grinding a raw material composition that comprises the compound.

# FIG. 1

# FIG. 2A

EXAMPLE 1

Regulus 1.0kV-D 2.3mm x50.0k SE+BSE(TU)　　　　1.00 μm

FIG. 2B

EXAMPLE 2

Regulus 1.0kV-D 2.3mm x50.0k SE+BSE(TU)          1.00μm

FIG. 2C

EXAMPLE 3

Regulus 1.0kV-D 2.3mm x50.0k SE+BSE(TU)          1.00μm

FIG. 2D

EXAMPLE 4

Regulus 1.0kV-D 2.0mm x50.0k SE+BSE(TU)          1.00μm

## FIG. 2E

EXAMPLE 5

Regulus 1.0kV-D 2.0mm x50.0k SE+BSE(TU)    1.00 μm

## FIG. 2F

EXAMPLE 6

Regulus 1.0kV-D 2.0mm x50.0k SE+BSE(TU)    1.00 μm

## FIG. 2G

EXAMPLE 7

Regulus 1.0kV 2.5mm x50.0k SE(U)    1.00 μm

FIG. 2H    EXAMPLE 8

FIG. 2I    EXAMPLE 9

FIG. 2J    EXAMPLE 10

# FIG. 2K

EXAMPLE 11

# FIG. 2L

EXAMPLE 12

# FIG. 2M

EXAMPLE 13

## FIG. 2N

EXAMPLE 14

Regulus 1.0kV-D 2.2mm x50.0k SE+BSE(U)     1.00 μm

## FIG. 2O

COMPARATIVE EXAMPLE 1

Regulus 1.0kV-D 2.1mm x10.0k SE+BSE(U)     5.00 μm

# FIG. 3

# FIG. 4

# FIG. 5

## INTERNATIONAL SEARCH REPORT

| International application No. |
|---|
| **PCT/JP2022/027921** |

### A. CLASSIFICATION OF SUBJECT MATTER

*C01G 25/00*(2006.01)i; *H01M 4/62*(2006.01)i; *H01B 1/06*(2006.01)i; *H01M 6/18*(2006.01)i; *H01M 10/0562*(2010.01)i
FI: C01G25/00; H01M10/0562; H01M6/18 B; H01M6/18 C; H01M4/62 Z; H01B1/06 A

According to International Patent Classification (IPC) or to both national classification and IPC

### B. FIELDS SEARCHED

Minimum documentation searched (classification system followed by classification symbols)

C01G25/00; H01M4/62; H01B1/06; H01M6/18; H01M10/0562; C01F7/00; C01D15/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

CAplus/REGISTRY (STN); JSTPlus/JST7580/JSTChina (JDreamIII)

### C. DOCUMENTS CONSIDERED TO BE RELEVANT

| Category* | Citation of document, with indication, where appropriate, of the relevant passages | Relevant to claim No. |
|---|---|---|
| X | JP 2016-4708 A (PANASONIC INTELLECTUAL PROPERTY MANAGEMENT CO., LTD.) 12 January 2016 (2016-01-12) paragraphs [0044]-[0048], [0070]-[0076], table 1 | 1-2, 6-8 |
| X | CN 102443236 A (BYD CO., LTD.) 09 May 2012 (2012-05-09) claims 1-3, examples 1, 5 | 1-2, 6-8 |
| X | WO 2019/181909 A1 (TDK CORPORATION) 26 September 2019 (2019-09-26) paragraphs [0060]-[0061], examples 3-6, 8-13, 16-20, 24 | 1, 4-8 |
| X | JP 2018-45965 A (TOSHIBA CORP) 22 March 2018 (2018-03-22) paragraphs [0056]-[0067], [0144]-[0145], tables 1-2 | 1, 4-8 |
| X | JP 2020-95934 A (PANASONIC INTELLECTUAL PROPERTY MANAGEMENT CO., LTD.) 18 June 2020 (2020-06-18) paragraphs [0010], [0018], [0129]-[0135], table 1A | 1, 6-8 |
| A | WO 2020/175171 A1 (PANASONIC INTELLECTUAL PROPERTY MANAGEMENT CO., LTD.) 03 September 2020 (2020-09-03) | 1-8 |

✓ Further documents are listed in the continuation of Box C.  ✓ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **07 September 2022** | **20 September 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**

International application No.

**PCT/JP2022/027921**

C.      DOCUMENTS CONSIDERED TO BE RELEVANT

| Category* | Citation of document, with indication, where appropriate, of the relevant passages | Relevant to claim No. |
|---|---|---|
| P, X | WO 2021/161604 A1 (PANASONIC INTELLECTUAL PROPERTY MANAGEMENT CO., LTD.) 19 August 2021 (2021-08-19)<br>paragraphs [0018]-[0034], examples 1-18 | 7 |

Form PCT/ISA/210 (second sheet) (January 2015)

**INTERNATIONAL SEARCH REPORT**
Information on patent family members

International application No.

**PCT/JP2022/027921**

| Patent document cited in search report | | | Publication date (day/month/year) | Patent family member(s) | | | Publication date (day/month/year) |
|---|---|---|---|---|---|---|---|
| JP | 2016-4708 | A | 12 January 2016 | (Family: none) | | | |
| CN | 102443236 | A | 09 May 2012 | (Family: none) | | | |
| WO | 2019/181909 | A1 | 26 September 2019 | US | 2020/0381774 | A1 | |
| | | | | paragraphs [0076]-[0077], examples 3-6, 8-13, 16-20, 24 | | | |
| | | | | CN | 111868991 | A | |
| | | | | DE | 112019001409 | T | |
| JP | 2018-45965 | A | 22 March 2018 | US | 2018/0083279 | A1 | |
| | | | | paragraphs [0069]-[0081], [0162]-[0163], tables 1-2 | | | |
| | | | | CN | 107834058 | A | |
| | | | | EP | 3297064 | A1 | |
| | | | | KR | 10-2018-0030746 | A | |
| JP | 2020-95934 | A | 18 June 2020 | US | 2020/0168945 | A1 | |
| | | | | paragraphs [0016], [0024], [0163]-[0170], table 1A | | | |
| | | | | CN | 111244533 | A | |
| WO | 2020/175171 | A1 | 03 September 2020 | CN | 113454735 | A | |
| | | | | EP | 3933857 | A1 | |
| | | | | US | 2021/0359340 | A1 | |
| WO | 2021/161604 | A1 | 19 August 2021 | (Family: none) | | | |

Form PCT/ISA/210 (patent family annex) (January 2015)

**REFERENCES CITED IN THE DESCRIPTION**

**Patent documents cited in the description**

- JP 2011129312 A

- JP 2008277170 A